# EUROPEAN PATENT SPECIFICATION

(11) **EP 3 336 853 B1**
(45) Date of publication and mention of the grant of the patent: **24.02.2021**
(21) Application number: 15901040.4
(22) Date of filing: 13.08.2015
(51) Int. Cl.: G21F 9/02, B01D 50/00, B01D 46/00, B01D 47/02

(54) **APPARATUS FOR FILTERING RADIOACTIVE MATERIALS**
VORRICHTUNG ZUM FILTERN RADIOAKTIVER MATERIALIEN
APPAREIL POUR FILTRER DES MATIÈRES RADIOACTIVES

(30) Priority: 11.08.2015 KR 20150113301
(43) Date of publication of application: 20.06.2018
(73) Proprietor: Korea Hydro & Nuclear Power Co., Ltd, 38120 Gyeongsangbuk-do (KR)
(72) Inventor: KIM, Yong Soo, Daejeon 34023 (KR); HWANG, Do Hyun, Daejeon 34008 (KR); LEE, Keun Sung, Yuseong-gu, Daejeon 34034 (KR); KIM, Ji Hwan, Daejeon 34061 (KR)
(74) Representative: Rösler Rasch van der Heide & Partner
(86) International application number: PCT/KR2015/008526
(87) International publication number: WO 2017/026558

(56) References cited:
- JP-A- 2014 044 118
- KR-A- 20130 137 617
- KR-B1- 101 503 288
- KR-B1- 101 503 288
- KR-B1- 101 536 235
- KR-B1- 101 536 235
- KR-Y1- 200 267 887
- US-A1- 2012 121 056
- US-A1- 2015 221 403

## Description

### Technical Field

The present invention relates to an apparatus for filtering a radioactive gas generated from nuclear fuel leaked when an accident occurs in a nuclear power plant, and more particularly, to a filtration apparatus capable of preventing contamination inside the containment building.

### Background Art

In the event of a severe accident where the core melts in the containment building, a significant amount of radioactive gas is released from the core melt. Most of the radioactive gaseous effluents of nuclear power plants are treated before they are released to the atmosphere. Current practice involves extracting radioactive particles from the effluent prior to discharging the radioactive gas effluent to the atmosphere, which requires filtration of the contaminated gas from the radioactive gas and ventilation of the building. Ventilation and purification systems can generally filter 99.9% of particles with a diameter of about 0.3 mm.

Radioactive contamination refers to the accumulation or presence of radioactive material on the interior or surface of solid, liquid, or gas. This radioactive contamination poses a risk from the radioactive decay of the contaminant, which, releases harmful ionizing radiation such as α, 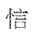 particles, 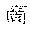 rays or neutrons. Air, soil, people, plants and animals are contaminated by nuclear fuel and fission products following the atomic bombing of nuclear weapons or destruction of reactor containment buildings. Examples include Bikini Atoll, the Rocky Platt Factory in Colorado, the Fukushima Daiichi Nuclear Power Plant accident, and the Chernobyl nuclear power plant accident. Therefore, it is indispensable to have a filtration device that is required to respond early to radioactive material in the event of an accident in a nuclear power plant.

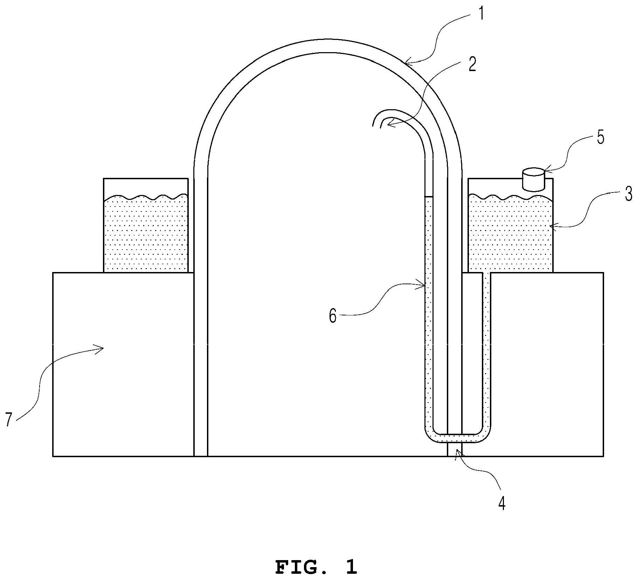

In this connection, Korean Patent Laid-Open Publication No. 2014-0062654 (filtration exhaust system of a passive reactor building using a cooling water tank outside a reactor building) discloses a filtration and exhaust system for filtering radioactive material. Referring to FIG. 1, the filtration and exhaust system comprises an inlet 2 for introducing a steam-gas mixture to solve the complexity of the system due to the installation of a separate filtration tank and a number of valves in the system, a U-shaped inflow pipe 6 connected to the inlet 2 for forming the appropriate head pressure, a cooling water tank 3 connected to the inflow pipe 6 for filtering the steam-gas mixture with cooling water, and a filtration device 5 installed on the top of the cooling water tank for filtering the radioactive substance that is not filtered by the cooling water.

In addition, the filtration and exhaust system of the prior art has a problem that the components and the atmosphere in the containment building are contaminated before the radioactive material generated in the reactor cavity is discharged to the outside of the building, and accordingly there is a further demand for decontamination in the containment building.

### [Prior Art Literature]

### [Patent Literature]

1. Korean Patent Publication No. 2014-0062654 Document US10062462 B2 is another prior art example and discloses a facility for reducing radioactive material in a nuclear power plant.

### Disclosure

### Technical Problem

The present invention aims at filtering the radioactive gas generated from the core melt before it is diffused from inside the reactor cavity to the containment building atmosphere.

### Technical solution

In order to achieve the above object, the present invention provides an apparatus for filtering radioactive material according to claim 1.

### Advantageous Effects

According to the present invention, there is an advantage that the filtration unit is disposed between the reactor cavity and the atmosphere of the containment building to prevent the radioactive gas from diffusing into the containment building atmosphere.

Further, the present invention is advantageous in that the filtration unit can filter the radioactive material by a stepwise dry and wet process and thereby effectively decontaminating the radioactive gas.

Further, the present invention is advantageous in that the dry filter can primarily filter the relatively large particle type of radioactive material without a separate power source by using the difference in the traveling speed between the substances in the radioactive gas.

In addition, the present invention is advantageous in that, as the recessed portion is formed in the connection pipe, the primarily filtered radioactive gas can be effectively extruded into the wet filter.

### Description of Drawings

FIG. 1 shows a conventional filtration and exhaust system of a containment building.
FIG. 2 shows a radioactive material filtering apparatus according to an embodiment of the present invention.
FIG. 3 shows a filter of a dry filter according to an embodiment of the present invention.

### Best Mode

Hereinafter, the present invention will be described in detail with reference to the accompanying drawings. However, the present invention is not limited by the exemplary embodiments, but is defined by the scope of the appended claims. Like reference numerals in the drawings denote members performing substantially the same function

The objects and effects of the present invention can be understood or clarified naturally by the following description, and the objects and effects of the present invention are not limited by the following description. In the following description of the present invention, a detailed description of known technologies related to the present invention will be omitted when it is determined that the present invention may be unnecessarily obscured thereby.

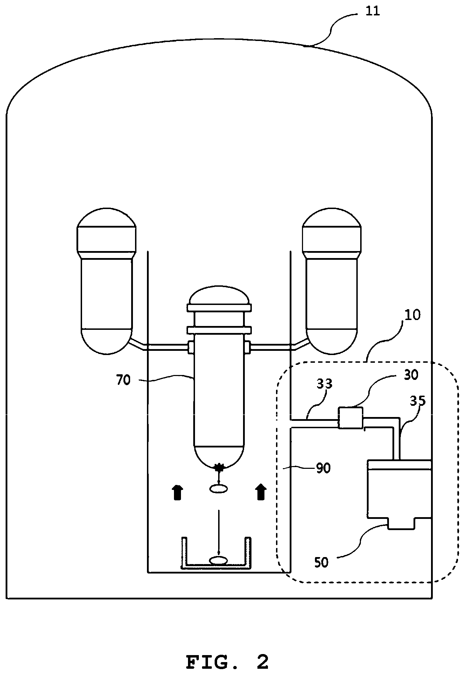

FIG. 2 shows an apparatus for filtering radioactive material according to an embodiment of the present invention. Referring to FIG. 2, the apparatus for filtering radioactive material comprises a suction pipe 33 and a filtration unit 10. The apparatus for filtering radioactive material is installed in connection with the reactor cavity 90 outside the reactor pressure vessel 70.

The suction pipe 33 is capable of sucking the radioactive gas generated from the core melt by the pressure inside the reactor cavity 90. One end of the suction pipe 33 is connected to the upper outer circumferential surface of the reactor cavity 90 and the other end of the suction pipe 33 is connected to the dry filter 30 in the filtration unit 10.

The suction pipe 33 is located between the reactor cavity 90 and the filtration unit 10 and serves as a passage for sucking and delivering the radioactive gas. The reactor cavity 90 is installed to suppress the radiation of the radiated gas to the outside during the loss of coolant accident (LOCA), and to secure the safety of general public and power plant personnel around the power plant. The suction pipe 33 is installed inside the containment building 11.

The reactor cavity 90 serves as a pressure barrier when the radiant gas is released with the hot steam and is the final barrier to the dissipation of the radiant gas.

The gas pressure generated in the reactor cavity 90 pushes the radioactive gas to the suction pipe 33. When the suction pipe 33 is installed, other pipes formed in the reactor cavity 90 can be designed by finishing touches such that all the gas pressure can be applied to the suction pipe 33.

The suction pipe 33 sucks the radioactive gas by the pressure of the reactor cavity 90 and delivers the radioactive gas to the filtration unit 10 without the help of a separate pump or the like.

The filtration unit 10 removes the radioactive material in the radioactive gas flowing into the suction pipe 33 by a stepwise dry and wet process and discharges the radioactive gas to the outside of the containment building 11. The filtration unit 10 comprises a dry filter 30 and a wet filter 50.

The dry filter 30 filters the particulate radioactive material by generating a difference in the traveling speed between the substances in the radioactive gas. The dry filter 30 is connected to the lower end of the suction pipe 33 and has a connection pipe 35 in the upper portion for discharging the radioactive gas in which the particle type radioactive material has been filtered after the dry process, thereby causing a difference in the traveling speed between the materials due to the heat rise of the radioactive gas introduced into the suction pipe 33.

The suction pipe 33 may be rigidly installed so that there is no leakage path so as to prevent clogging of the filter 31 when a severe accident occurs.

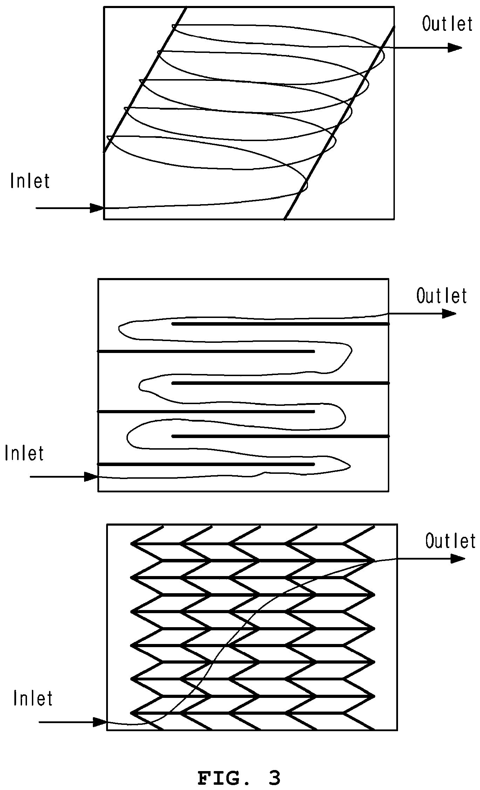

FIG. 3 shows the structure of the filter 31 of the dry filter 30 installed in the apparatus for filtering radioactive material according to the embodiment of the present invention. Referring to FIG. 3, the radioactive gas introduced from the suction pipe 33 is diffused upward, and is discharged through the filter 31 to the outlet.

The filter 31 may form a layered structure therein to increase the traveling path of the radioactive gas. The filter 31 removes particulate contaminants from the radioactive gas diffused from the suction pipe 33. The filter 31 can be designed to collect contaminants from the radioactive gas and drop them down by gravity to retain the deposits.

The filter 31 uses gravitational sedimentation, which is a method of separating contaminant particles as the radioactive gas introduced from the suction pipe 33 is rapidly diffused by heat and pressure.

The filtration method of the filter 31 may be an inner filtration method in which the radioactive gas is relatively loosely filled in the mold, which is used as a filtration layer. The inner filtration method is suitable for the treatment of radioactive gases with a very low concentration because of its slow filtration rate.

The filter 31 may be provided with a filter cloth or a filter paper to perform a surface filtration method. A particle layer may be formed on the filter cloth or filter paper. The filter 31 can collect fine particles by using a particle layer initially attached to the surface (referred to as a first adhesion layer or a primary layer) as a filtration layer.

The connection pipe 35 is provided on the upper portion of the dry filter 30 to discharge the radioactive gas having passed through the filter 31 to the wet filter 50. The connection pipe 35 introduces the radioactive gas after the dry process into the wet filter 50. The connection pipe 35 is formed with a recessed portion in which the inner diameter is reduced and the inner pressure is increased so as to extrude the introduced radioactive gas toward the wet filter 50.

The wet filter 50 filters the particulate radioactive material by introducing the discharged radioactive gas into the cooling water after the dry process and agglomerating the substances in the radioactive gas. The wet filter 50 is capable of secondarily filtering the radioactive gas discharged from the dry filter 30 by a precipitation method using cooling water.

An in-containment refueling water storage tank (IRWST) in the containment building 11 is capable of filtering the radioactive gas discharged from the dry filter 30 by the cooling water in it. The refueling water storage tank (IRWST) can be built in the containment building 11 to ensure structural safety in the event of an earthquake. The refueling water storage tank (IRWST) 11 can be filled between the walls with compressible metal filler having a head shielding effect, and sealant can be applied on the upper portion of the refueling water storage tank to the upper portion so as to block water.

The interior of the refueling water storage tank (IRWST) in the containment building 11 may be provided as a space independent of the arrangement of the steam generator, the reactor, and the like, and may be installed with concrete casting or steel frame. The refueling water storage tank (IRWST) in the containment building 11 treats the radioactive gas which has not been filtered by the dry filter 30 with the cooling water. The radioactive gas having passed through the dry filter 30 may undergo a phase transition in the form of liquid or solid and the contaminant in the form of minute particles smaller than the particles filtered in the dry filter 30 is not composed of a precipitate of the dry filter 30. Accordingly, the contaminant may be introduced into the wet filter 50.

The refueling water storage tank (IRWST) in the containment building 11 introduces the unfiltered high temperature radioactive gas from the dry filter 30 through the connection pipe 35. The radioactive gas at a high temperature can be rapidly cooled by cooling water and condensed in solid form and deposited on the bottom.

The cooling water supplied to the refueling water storage tank (IRWST) in the containment building 11 can be introduced from a drain port called a spillway. The cooling water collides with the bottom surface of the refueling water storage tank (IRWST) in the containment building 11, moves along the inner wall of the refueling water storage tank (IRWST) in the containment building 11 after a lapse of time, and can be discharged through an outlet. At this time, the cooling water in the refueling water storage tank (IRWST) in the containment building 11 generates a recirculating flow of cooling water on the free surface which is the upper surface where the spillway is located.

The cooling water rapidly cools the temperature of the radioactive gas entering the refueling water storage tank (IRWST) in the containment building 11, and causes a recirculating flow to condense contaminants in the gas in a short time. The gas which has not been filtered in the refueling water storage tank (IRWST) in the containment building 11 can be collected at the upper portion, and the collected gas can be regarded as a gas in which most of the radioactive material is removed.

The upper portion of the refueling water storage tank (IRWST) in the containment building 11 is coated with a sealant for blocking water and when the uncondensed gas rises and gathers at the upper portion, the finally filtered gas can be discharged outside the containment building 11.

The connection pipe 35 formed with the recessed portion is provided so that the radioactive gas discharged from the dry filter 30 can enter the cooling water. The connection pipe 35 is provided to move the fluid by the pressure difference. When the dry filter 30 and the wet filter 50 are connected to each other, a pressure difference is generated due to the area of the inside, thereby moving the radioactive gas. A venturi nozzle may be used for the connection pipe 35 formed with the recessed portion in the present embodiment.

The connection pipe 35 in which the recessed portion is formed has the discharging portion immersed in the cooling water. The introduced radioactive gas is not discharged to the outside by the connection pipe 35 immersed in the cooling water but can be precipitated by reacting with the cooling water immediately.

While the present invention has been described in detail with reference to exemplary embodiments thereof, it is to be understood that the invention is not limited to the disclosed exemplary embodiments. Therefore, the scope of the present invention should not be limited to the above-described embodiments, but should be determined by all changes or modifications derived from the scope of the appended claims.

### <Description of the Reference Numerals in the Drawings>

| | | | |
|---|---|---|---|
| 10 | : filtration unit | 11 | : containment building |
| 30 | : dry filter | 31 | : filter |
| 33 | : suction pipe | 35 | : connection pipe |
| 50 | : wet filter | 70 | : reactor pressure vessel |
| 90 | : reactor cavity | | |

## Claims

1. (Currently Amended) An apparatus for filtering radioactive material comprising: a suction pipe (33) connected at one end to the outer peripheral surface of the upper portion of a reactor cavity (90) for sucking radioactive gas generated from a core melt by the pressure inside the reactor cavity (90); and
a filtration unit (10) installed inside a containment building (11) for removing radioactive material in a radioactive gas sucked into the suction pipe (33), wherein the filtration unit (10) comprises a dry filter (30) connected to the suction pipe (33) for primarily filtering the radioactive material in a radioactive gas sucked into the suction pipe (33), and a wet filter (50) connected to the dry filter (30) via a connection pipe (35) for secondarily filtering the radioactive material using cooling water flowed into the wet filter (50),
**characterized in**
**that** the suction pipe (33) is connected to a lower portion of the dry filter (30) and the connection pipe (35) is connected to an upper portion of the dry filter (30), thereby causing rise by heat of the radioactive gas sucked into the suction pipe (33); and
**that** the connection pipe (35) is formed with a recessed portion of which the inner diameter is reduced for the inner pressure to increase, and the recessed portion is immersed in the cooling water of the wet filter (50).

2. (Currently Amended) The apparatus according to claim 1, wherein the dry filter (30) is formed with a layered structure therein.

## Patentansprüche

1. (Aktuell geänderte Fassung) Vorrichtung zum Filtern von radioaktivem Material, aufweisend:
ein Saugrohr (33), das an einem Ende mit der äußeren peripheren Fläche des oberen Abschnitts eines Reaktorhohlraums (90) verbunden ist, um radioaktives Gas, das aus einer Kernschmelze erzeugt wurde, durch den Druck in dem Reaktorhohlraum (90) anzusaugen; und
eine Filtriereinheit (10), die in einem Sicherheitsbehälter (11) zum Entfernen von radioaktivem Material in einem radioaktiven Gas, das in das Saugrohr (33) gesaugt wurde, installiert ist, wobei die Filtriereinheit (10) einen Trockenfilter (30), der mit dem Saugrohr (33) verbunden ist, um primär das radioaktive Material in einem radioaktiven Gas zu filtern, das in das Saugrohr (33) gesaugt wird, und einen Nassfilter (50), der mit dem Trockenfilter (30) über ein Verbindungsrohr (35) verbunden ist, um sekundär das radioaktive Material unter Verwendung eines Kühlwassers zu filtern, das in den Nassfilter (50) strömt, aufweist,
**dadurch gekennzeichnet, dass**
das Saugrohr (33) mit einem unteren Abschnitt des Trockenfilters (30) verbunden ist und das Verbindungsrohr (35) mit einem oberen Abschnitt des Trockenfilters (30) verbunden ist, sodass Wärme von dem radioaktiven Gas, das in das Saugrohr (33) gesaugt wird, aufsteigt; und
das Verbindungsrohr (35) mit einem ausgeschnittenen Abschnitt gebildet ist, dessen Innendurchmesser verringert ist, damit der Innendruck ansteigt, wobei der ausgeschnittene Abschnitt in das Kühlwasser des Nassfilters (50) eingetaucht wird.

2. (Aktuell geänderte Fassung) Vorrichtung nach Anspruch 1, wobei der Trockenfilter (30) mit einer geschichteten Struktur darin gebildet ist.

## Revendications

1. Appareil pour filtrer des matières radioactives comprenant :
un tuyau d'aspiration (33) connecté à l'extrémité de la surface périphérique extérieure de la partie supérieure d'une cavité de réacteur (90) pour aspirer du gaz radioactif généré depuis un fond de fusion par la pression à l'intérieur de la cavité de réacteur (90) ; et
une unité de filtration (10) installée à l'intérieur d'un bâtiment de rétention (11) pour éliminer le matériau radioactif dans un gaz radioactif aspiré dans le tuyau d'aspiration (33), l'unité de filtration (10) comprenant un filtre sec (30) connecté au tuyau d'aspiration (33) pour la filtration primaire du matériau radioactif dans un gaz radioactif aspiré dans le tuyau d'aspiration (33), et un filtre humide (50) connecté au filtre sec (30) par un tuyau de connexion (35) pour la filtration secondaire du matériau radioactif en utilisant de l'eau froide affluant dans le filtre humide (50),
**caractérisé en ce que** le tuyau d'aspiration (33) est connecté à une partie inférieure du filtre sec (30) et que le tuyau de connexion (35) est connecté à une partie supérieure du filtre sec (30), en provoquant ainsi une élévation par la chaleur du gaz radioactif aspiré dans le tuyau d'aspiration (33) ; et
que le tuyau de connexion (35) est conformé avec une partie en retrait dont le diamètre intérieur est réduit pour augmenter la pression intérieure, et que la partie en retrait est immergée dans l'eau de refroidissement du filtre humide (50).

2. Appareil selon la revendication 1, dans lequel le filtre sec (30) est conformé avec une structure feuilletée à l'intérieur.
